(19) Europäisches Patentamt
European Patent Office
Office européen des brevets

(11) **EP 1 605 437 B1**

(12) **EUROPEAN PATENT SPECIFICATION**

(45) Date of publication and mention
of the grant of the patent:
**29.08.2007 Bulletin 2007/35**

(51) Int Cl.:
*G10L 11/00* (2006.01)    *G10L 15/20* (2006.01)

(21) Application number: **04017773.5**

(22) Date of filing: **27.07.2004**

(54) **Determination of the common origin of two harmonic components**

Bestimmung einer gemeinsamen Quelle zweier harmonischer Komponenten

Détection d'une source commune de deux composants harmoniques

(84) Designated Contracting States:
**DE FR GB**

(30) Priority: **04.06.2004 EP 04013275**

(43) Date of publication of application:
**14.12.2005 Bulletin 2005/50**

(73) Proprietor: **Honda Research Institute Europe GmbH**
**63073 Offenbach/Main (DE)**

(72) Inventors:
• **Joublin, Frank**
  **Honda Research Institute Eur. GmbH**
  **63073 Offenbach/Main (DE)**
• **Heckmann, Martin**
  **Honda Research Institute Eur.GmbH**
  **63073 Offenbach/Main (DE)**

(74) Representative: **Rupp, Christian**
**Mitscherlich & Partner**
**Patent- und Rechtsanwälte**
**Sonnenstrasse 33**
**80331 München (DE)**

(56) References cited:
• **VIRTANEN T ET AL: "Separation of harmonic sound sources using sinusoidal modeling" ACOUSTICS, SPEECH, AND SIGNAL PROCESSING, 2000. ICASSP '00. PROCEEDINGS. 2000 IEEE INTERNATIONAL CONFERENCE ON 5-9 JUNE 2000, PISCATAWAY, NJ, USA,IEEE, vol. 2, 5 June 2000 (2000-06-05), pages 765-768, XP010504835 ISBN: 0-7803-6293-4**
• **JINACHITRA P ED - INSTITUTE OF ELECTRICAL AND ELECTRONICS ENGINEERS: "Constrained EM estimates for harmonic source separation" 2003 IEEE INTERNATIONAL CONFERENCE ON ACOUSTICS, SPEECH, AND SIGNAL PROCESSING. PROCEEDINGS. (ICASSP). HONG KONG, APRIL 6 - 10, 2003, IEEE INTERNATIONAL CONFERENCE ON ACOUSTICS, SPEECH, AND SIGNAL PROCESSING (ICASSP), NEW YORK, NY : IEEE, US, vol. VOL. 1 OF 6, 6 April 2003 (2003-04-06), pages VI609-VI612, XP010640825 ISBN: 0-7803-7663-3**
• **GROSSBERG S ET AL: "ARTSTREAM: a neural network model of auditory scene analysis and source segregation" NEURAL NETWORKS, ELSEVIER SCIENCE PUBLISHERS, BARKING, GB, vol. 17, no. 4, May 2004 (2004-05), pages 511-536, XP004503997 ISSN: 0893-6080**

## Description

Field of the invention

The present invention relates to a technique for determining if two frequency components originate from one common fundamental frequency. This technique can e.g. be used for a separation of acoustic sound sources in monaural recordings based on their underlying fundamental frequency. The invention, however, is not limited to the field of acoustics, but can also be applied to other signals like those originating from pressure sensors.

Background

When making acoustic recordings often multiple sound sources are present simultaneously. These can be different speech signals, noise (e.g. of fans) or similar signals. For further analysis of the signals it is firstly necessary to separate these interfering signals. Common applications are speech recognition or acoustic scene analysis. It is well known that harmonic signals can be separated in the human auditory system based on their fundamental frequency (see A. Bregman. Auditory Scene Analysis. MIT Press, 1990). Hereby it is noteworthy that a speech signal in general contains many voiced and hence harmonic segments.

In common approaches the input signal is split into different frequency bands via band-pass filters and in a later stage for each band at each instant in time an evidence value in the range of 0 and 1 for this band to originate from a given fundamental frequency is calculated (a simple unitary decision can be interpreted as using binary evidence values). By doing so a three dimensional description of the signal is obtained with the axis: fundamental frequency, frequency band, and time. Such a kind of representation is also found in the human auditory system (see G. Langner, H. Schulze, M. Sams, and P. Heil, The topographic representation of periodicity pitch in the auditory cortex. Proc. of the NATO Adv. Study Inst. on Comp. Hearing, pages 91--97, 1998). Based on these beforehand calculated evidence values, groups of bands with common fundamental frequency can be formed. Hence in each group only the harmonics emanating from one fundamental frequency and therefore belonging to one sound source are present. By this means the separation of the sound sources can be accomplished.

A crucial step in the separation of sound sources is the determination if two harmonics emanate from one fundamental frequency and hence from one single sound source. In common prior art approaches this is done via the auto-correlation function (see G. Hu and D. Wang. Monaural speech segregation based on pitch tracking and amplitude. IEEE Trans. On Neural Networks, Vol. 15, No. 5, pp 1135-1150, Sept. 2004). For each frequency band the auto-correlation is determined and frequencies being in a harmonic relation will share peaks in the lag domain. Hereby also a peak occurs at the lag corresponding to the frequency of the harmonic and multiples of this lag.

In "Separation of Harmonic Sound Sources Using Sinusoidal Modeling", ICASSP 2000, pp 765-768, Virtanen et. al. consider spectral lines after a Fourier Transform, and calculate all possible harmonic relations between pairs of spectral lines.

Also biological principles to solve the sound source separation are known (see B. Moore An Introduction to the Psychology of Hearing. Fifth Edition, Academic Press, 2003).

Object of the invention

In view of the foregoing, it is an object of the underlying invention to propose a more efficient technique for separating signals (e.g. sound) sources.

Another object of this invention is to provide an efficient method for determining if two harmonics emanate from one fundamental frequency and if two frequency bands originate from one single (e.g. sound) source.

Summary of the invention

The present invention replaces the use of the auto-correlation function according to the prior art by a technique called phase locking, i.e. a synchronization with the phase of the input signal.

The invention proposes to use the zero crossings of the signal under investigation to obtain the synchronization with the phase. Here either only zero crossings from negative to positive or from positive to negative or both can be used. In principle other points of the sinusoidal curve like the maxima or minima or the intersection points with a constant value can be used as well.

Brief description of the claims

According to a first aspect of the present invention a method to determine an evidence value capturing if two band-pass signals are harmonics of a common fundamental frequency is proposed. The method is based on the harmonic relation of the frequencies covered by the underlying band-pass filters and the evaluation of the distance of significant points of the sinusoidal signal, e.g. the zero crossings or the maxima or minima or threshold-crossing of the signals, wherein the evaluation of the distance of these significant points performs an auto synchronization between the two harmonics under investigation compensating for the frequency dependent delay introduced by the vocal tract in the case of speech signals.

Particularly, the measured distance can be mapped to evidence values via a nonlinear function in the range of 0 and 1.

All signals can furthermore be compared to all signals being possible fundamental frequencies and all possible harmonics to each other.

According to another aspect of the invention a method further comprising the steps of generating an inhibitory signal if a correspondence is found which could also create a correspondence with a different harmonic, wherein lower fundamental frequencies and their correspondences inhibit higher fundamental frequencies (e.g. the relation $f_0$, $4f_0$ suppresses $f_0'=2f_0$, $2f_0'=4f_0$).

According to a further aspect of the invention a method is provided, which additionally moves the evidence values of harmonics from a non-dominant fundamental frequency, but being in a harmonic relation to the dominant fundamental frequency, to the dominant fundamental frequency and the corresponding harmonic.

According to a still further aspect of the invention a method to additionally suppress cross-talk between adjacent band-pass filter channels by applying a Mexican hat filter along the frequency axis is proposed.

According to the invention furthermore a computer software product, adapted to implement the foregoing methods when running on a computing device is provided.

Finally the present invention is directed to the use of the foregoing methods for the separation of acoustic sound sources in monaural recordings based on their underlying fundamental frequency.

Brief description of the drawings

Further advantages and possible applications of the underlying invention will become evident for the man skilled in the art from the subordinate claims as well as from the following detailed description taken in conjunction with the figures of the accompanying drawings. Herein,

Fig. 1   shows how to obtain two frequency bands filtered from an input signal according to the present invention,

Fig. 2   shows the significant points of the frequency bands for the present invention, and

Fig. 3   is a flow chart for determining if two frequency components originate from one common fundamental frequency according to the present invention,

Fig. 4   is a block diagram of a system determining an evidence value of the common origin of two harmonic signals according to the invention.

Detailed description of the invention

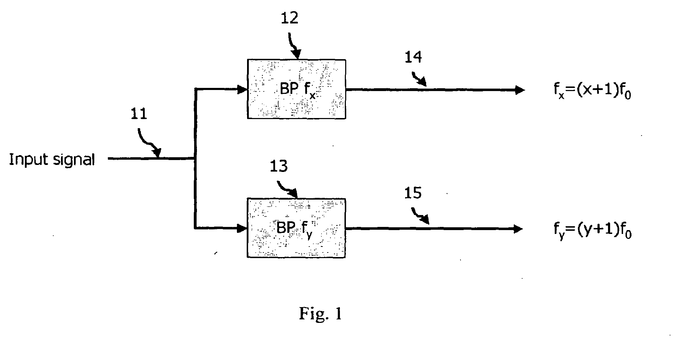

Fig. 1 shows two frequency bands 14, 15 filtered from an input signal 11, wherein the invention determines if the two frequency bands 14, 15 originate from the same fundamental frequency. Hereby the frequency band 14 can also contain said fundamental frequency. Nevertheless the actual fundamental frequency has not to be present in the comparison as the comparison can also be performed only inbetween harmonic signals. This property also enables the comparison in signals which do not contain the fundamental frequency as it can be the case for some speech signals.

When determining if two signals 14, 15 emanate from one single source only filter bands are compared that are in a harmonic relation. Therefore the harmonic order the two signals can possibly have is known in advance, such that the following three parameters are known when working out whether the two signals 14, 15 derive from the same fundamental, wherein the signal 14 can contain the fundamental frequency:

-   $f_0$, which is the frequency of the fundamental the comparison is based on,
-   $f_x = (x+1) * f_0$, which is the frequency of the first signal 14 that is possibly the $X^{th}$ harmonic of the fundamental, and
-   $f_y = (y+1) * f_0$, which is the frequency of the second signal 15 that is possibly the $y^{th}$ harmonic of the fundamental.

The input signal 11 that is e.g. a sound signal is fed to two band-pass filters 12, 13. Each band-pass 12, 13 transmits only frequencies within a preferably small band around the frequencies $f_x$ and $f_y$ respectively. The resulting signals are the two filter bands being in a harmonic relation to be tested 14, 15.

In fact the technique of the present invention, called phase locking, targets a synchronization with the phase of the input signal. This is achieved by evaluating the distance between significant points of the filter bands 14, 15.

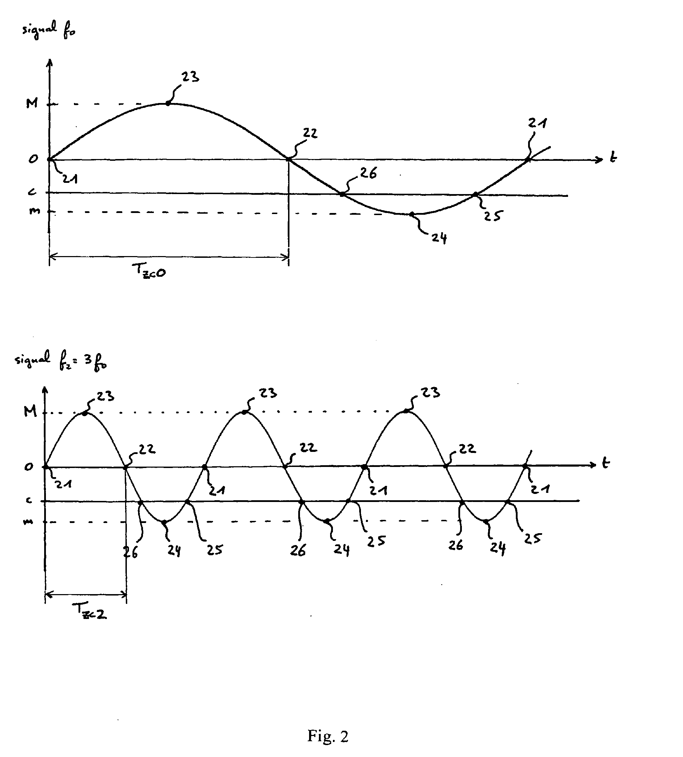

Fig. 2 illustrates possible significant points for the invention, e.g. the zero crossings of the signals 14, 15 from negative to positive values 21 and/or from positive to negative values 22, the local maxima 23 and/or minima 24 values, and the intersection of the signals 14, 15 with a constant c from lower to higher values 25 and/or inversely 26.

According to the invention, it is compared if significant points e.g. the zero crossings in the two filter bands 14, 15 under investigation are synchronous. This can be accomplished by measuring e.g. the distance between zero crossings in both filter bands to test 14, 15. While doing so it is taken into account that for higher harmonics zero crossings are closer together than for the fundamental.

Fig. 2 shows the zero crossing distances $T_{zc0}$ $T_{zc2}$ for different frequencies. Two signals having a frequency $f_0$ and $f_2 = 3f_0$ are considered to be the fundamental and the corresponding second harmonic respectively. The zero crossing distance $T_{zc2}$ of the signal $f_2$ will be three times smaller than the zero crossing distance $T_{zc0}$ of the signal $f_0$.

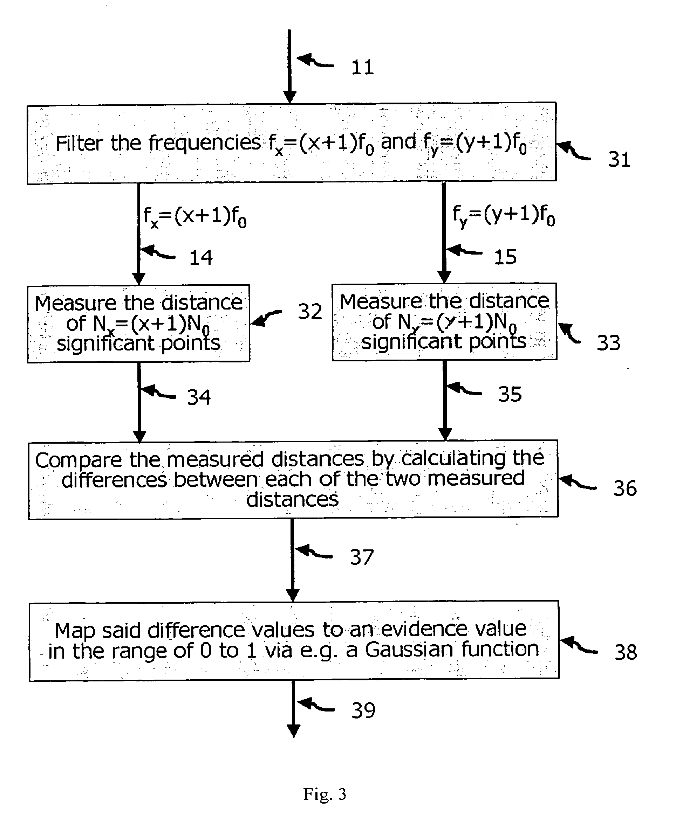

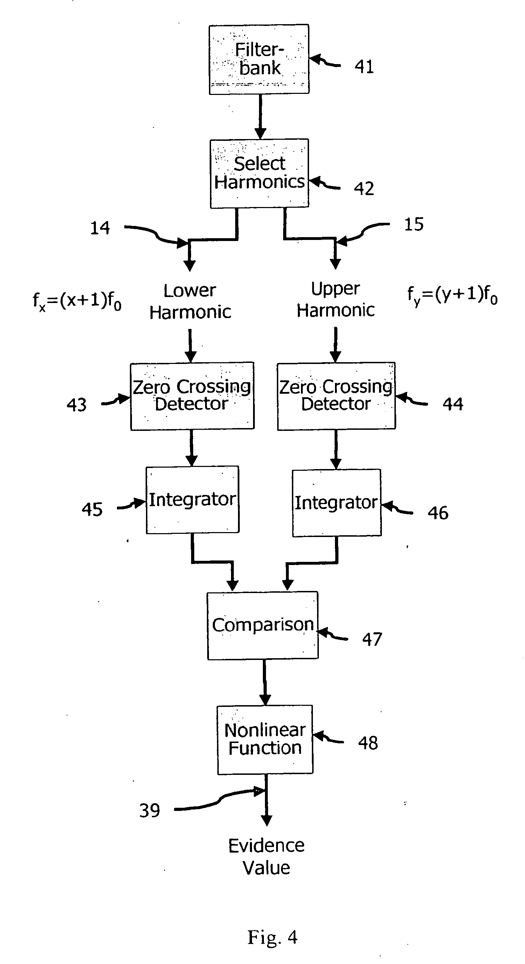

In the following it will be explained referencing to Fig. 3 and 4 how to determine if two signals emanate from one single source only according to the present invention.

As shown in Fig. 3, in a first step the input signal 11 is filtered 31 to generate the two frequency bands to test 14, 15.

In a second step, the distance of significant points is measured 32, 33 for the two signals 14, 15. An important parameter is thereby the number of successive significant points that should be taken into account. As the frequency of the signals 14, 15 is different, the number of points is adapted for each signal. The number of points $N_x$ for the band $f_x=(x+1)f_0$ is obtained by considering the potential harmonic order of said frequency band according to the equation:

$$N_x = N_0 (x+1)$$

wherein

- $N_0$ and $N_x$ are the number of significant points of the bands $f_0$ and $f_x=(x+1)f_0$ respectively for which the distance is measured, and
- x is the potential harmonic order of the frequency band $f_x$ for the fundamental band $f_0$.

In a third step, the measured distances 34, 35 are compared 36 by calculating their difference 37. If the calculated difference 37 is less than a given threshold value, it is assumed that the two frequency bands 14, 15 are harmonics of the same fundamental, wherein the frequency band 14 can also be that fundamental frequency.

In a fourth step, the calculated difference 37 is mapped 38 to an evidence value 39 in the range of 0 to 1 via e.g. a Gaussian function, which evidence value 39 reflects the fact that the two frequency bands 14, 15 are harmonics of the same fundamental or not.

Fig. 4 depicts a system determining an evidence value of the common origin of two harmonic signals according to the invention. The block diagram shows a filter-bank 41 that is used to selectively filter the input signal into frequency bands. From the outputs of the filter-bank 41, two harmonic signal are selected 42: a lower harmonic 14 $f_x=(x+1)f_0$ and a upper harmonic 15 $f_y=(y+1)f_0$.

Each filtered harmonic 14, 15 is respectively fed into a zero crossing detector 43, 44 and into an integrator 45, 46. The use of zero crossing detectors 43, 44 is related to the fact that the significant points to be measured are the zero crossings. Other embodiments of the invention include detectors adapted to track other significant points such that local maxima 23, local minima 24, and/or intersections of the signals 14, 15 with a constant c from lower to higher values 25 and/or from higher to lower values 26.

The detected zero crossings 43, 44 are passed to integrators 45, 46 to measure the distance of respectively $N_x$ and $N_y$ significant points. A comparator 47 compares the measures output by the integrators 45, 46. A nonlinear function 48 then generates an evidence value 39 on the basis of said comparison 47. The nonlinear function 48 is e.g. a Gaussian function that map the comparison 47 to an evidence value 39 in the range of 0 to 1.

In the following an embodiment of the invention is described, wherein the significant points to be measured are the zero crossings.

It is proposed to use the expected distance of the underlying fundamental as a basis for the measurement. For the two frequency bands 14, 15 the distance between as many zero crossings as we expect from the harmonic order of the signals under investigation (e.g. starting from a zero crossing the distance to the over next zero crossing for $2f_0$) is measured. The distances of these zero crossings are compared for both filter bands 14, 15 under investigation.

Based on the differences of the two zero crossing measures it is determined if the two signals 14, 15 emanate from the same fundamental. If the difference is close to zero (i.e. below a given lower threshold value) they are supposed to emanate from the same fundamental and hence the evidence value is high. If the difference is large (compared to an upper threshold value) they are very unlikely to stem from the same fundamental and hence the resulting evidence value is low.

The mapping of the distances to evidence values can e.g. be done by a nonlinear function in the range of 0 and 1 (e.g. a Gaussian function). Due to the common origin of the fundamental frequency and the corresponding harmonics being the glottal excitation signal, the fundamental frequency and its harmonics are synchronous. This synchronicity is disturbed by the influence of the vocal tract, which induces a frequency dependent delay depending on the current articulation. The tracking of the differences of the zero crossings enables an adaptive cancellation of this delay as it performs an automatic synchronization of the two harmonics under investigation.

The correspondence of two signals 14, 15 can also be detected when the frequency of the underlying fundamental and hence the frequencies of the harmonics change as they will all change in the same manner and therefore the relative distance of the zero crossings is not affected. The calculated evidence values are marked in the aforementioned 3 dimensional space for fundamental frequency, filter band, and time. The last calculated evidence value is, for each signal under investigation, added in the 3 dimensional space on the fundamental frequency axis at the position of the supposed underlying fundamental frequency and on the frequency band axis at the position of the frequency band corresponding to the signal.

The resulting evidence value gives us a measure of the relation of the two signals for one period of the fundamental. For the calculation of this evidence value for the next period of the fundamental we start at the last zero crossing used for the last period of the fundamental.

In the common approach, when using the auto-correlation, the width of the peaks in the auto-correlation, hence the basis of the evaluation of the harmonic relation of the signals, depends on the frequency of the signal. Signals with low frequency have wide peaks and hence the measurement is very coarse. The algorithm of the present invention has the advantage that the resolution of the measurement depends only on the distance of the sampling points and hence on the sampling rate. This precision is for all frequencies as high or higher as when using the auto-correlation. Hence, in contrast to the auto-correlation method, the algorithm of the present invention is able to tell apart two signals 14, 15, which do not emanate from one common fundamental but are only coincidentally close to a harmonic relation.

During the comparisons the actual fundamental frequency and the possible harmonics 14, 15 are treated identically. This means that on the one hand comparisons between a fundamental and its possible harmonics and on the other hand comparisons only between possible harmonics of one fundamental are performed. When using only the comparison of filter bands the possible fundamental frequency values are discretized with the center frequencies of the band-pass filters used for decomposition of the signal. This does not constrain the usability of the algorithm of the present invention though as the assignment of signal components to different sources is also based on frequency bands. In addition a more precise evaluation of the fundamental frequency can be achieved by using the actual values of the difference of the zero crossings.

The upper frequency bound for the application of the algorithm of the present invention is determined by the sampling rate used. If the zero crossings are too close to each other (the frequency of the signal under investigation is too high compared to the sampling rate) no meaningful evidence values can be calculated any more. The actual value of the minimal distance of zero crossings also depends on the noise in the input signals. A reasonable value when using only either positive to negative or negative to positive zero crossings is 4 samples, which results in an upper frequency bound of one fifth of the sampling frequency.

By comparing as well all possible fundamental frequencies in a certain range (e.g. 50-1000Hz) with all harmonics (limited by the sampling rate) as all harmonics to each other, multiple cues for one given signal to emanate from a given fundamental frequency can be obtained. To counterbalance this excitatory effect and because a harmonic can only emanate from one fundamental frequency an inhibitory process is proposed. If the harmonic $4f_0$ is identified to emanate from $f_0$ the possible fundamental frequency $f_0'=2f_0$ receives inhibitory input (e.g. the inhibitory input is the negative of the excitatory input). By doing so it is postulated that the fundamental frequency with the lowest frequency is the more likely one.

After comparing all combinations of possible harmonics the dominant fundamental frequency at a given instant in time can be determined by summing the evidence values of all frequency bands. When the dominant fundamental frequency is determined, in a second inhibition stage all evidence values of non-dominant fundamental frequencies, which are in a harmonic relation to the dominant fundamental, are moved to the dominant fundamental frequency and the corresponding harmonic. These erroneous evidence values for the non-dominant fundamental frequency are a consequence of the harmonic relation between the dominant and non-dominant fundamental frequency, which results in their indistinguishability from the true fundamental frequency by the distance measure of the zero crossings.

When using band-pass filters to decompose the input signal, a harmonic generates responses in the filter with its center frequency closest to the frequency of the harmonic, but due to the limited selectivity of the filters also weaker responses in the neighboring filters. To suppress this cross-talk it is proposed to apply a Mexican hat filter along the frequency axis in a way that the envelope of adjacent band-pass signals is filtered. The central peak of the filter has to be chosen wider than 1 in order not to disturb changes of the frequency of the harmonics and hence transitions of the main response of the harmonic from one filter channel to the other.

## Claims

1. A method to determine an evidence value (39) being a measure representing if two band-pass signals (14, 15) are harmonics of a common fundamental frequency, wherein

   - the method evaluates the harmonic relation of the frequencies covered by the underlying band-pass filters (12, 13) and the distance (32, 33) of significant points of the sinusoidal signal, e.g. the zero crossings (21, 22) or the maxima (23) or minima (24) or threshold-crossing (25, 26) of the signals, and
   - the evaluation of the distance of these significant points performs an auto-synchronization between the two harmonics (14, 15) under investigation compensating for any frequency dependent delay.

2. The method according to claim 1, **characterized in that** the evaluated distance (34, 35) is mapped (38) to an evidence value (39) via a nonlinear function in the range of 0 and 1.

3. The method according to claim 1 or 2, **characterized in that**

all signals are compared to all signals being possible fundamental frequencies and all possible harmonics to each other.

4. The method according to any of the preceding claims,
the method comprising the additional steps of:

   - Generating an inhibitory signal if a correspondence between the two signals is found which could also create a correspondence with a different harmonic,

   wherein lower fundamental frequencies and their correspondences inhibit higher fundamental frequencies.

5. The method according to any of the preceding claims, comprising the step of moving the evidence values of harmonics from a non-dominant fundamental frequency, but being in a harmonic relation to the dominant fundamental frequency, to the dominant fundamental frequency and the corresponding harmonic.

6. The method according to any of the preceding claims, comprising the step of suppressing crosstalk between adjacent band-pass filter channels by applying a Mexican hat filter along the frequency axis.

7. A computer software product, adapted to implement a method according to any of the preceding claims when running on a computing device.

8. A computing means for determining an evidence value (39) being a measure if two band-pass signals (14, 15) are harmonics of a common fundamental frequency,
the computing means comprising:

   - means (47, 47) for evaluating the harmonic relation of the frequencies covered by the underlying band-pass filters (12, 13) and,
   - means (43, 44, 45, 46) for evaluating the distance (32, 33) of significant points of the sinusoidal signal, e.g. the zero crossings (21, 22) or the maxima (23) or minima (24) or threshold-crossing (25, 26) of the signals,

   wherein the evaluation of the distance of these significant points performs an auto-synchronization between the two harmonics (14, 15) under investigation compensating for any frequency dependent delay.

9. A computing means according to claim 8,
**characterized by**
means (48) for mapping the evaluated distance (34, 35) to an evidence value (39) via a nonlinear function in the range of 0 and 1.

10. A computing means according to claim 8 or 9,
**characterized by**
means for comparing all signals to all signals being possible fundamental frequencies and for comparing all possible harmonics to each other.

11. A computing means designed to implement a method according to any of claims 4 to 6.

12. Use of a method according to any of claims 1 to 6 for the separation of acoustic sound sources in monaural recordings based on their underlying fundamental frequency.

13. Use of a method according to any of claim 1 to 6 to separate noise from a signal source.

14. Use of a method according to any of claims 1 to 6 to separate signal components originating from different sources commonly present in a signal.

**Patentansprüche**

1. Verfahren zur Bestimmung eines Hinweis-Werts (39), der ein Maß darstellt, das aufzeigt, ob zwei Bandpass-Signale (14, 15) Oberschwingungen einer gemeinsamen Grundfrequenz sind, wobei

   - das Verfahren die harmonische Beziehung der von den Basis-Bandpassfiltern (12, 13) erfassten Frequenzen und den Abstand (32, 33) von signifikanten Stellen des sinusförmigen Signals, z.B. die Null-Durchgänge (21, 22) oder die Maxima (23) oder Minima (24) oder Grenzwert-Überschreitungen (25, 26) des Signals, auswertet, und
   - die Auswertung des Abstands dieser signifikanten Stellen die Durchführung einer Selbst-Synchronisation zwischen den beiden Oberschwingungen (14, 15) umfasst, gemäß einer Prüfung, die irgendeine frequenzabhängige Verzögerung kompensiert.

2. Verfahren nach Anspruch 1,
**dadurch gekennzeichnet, dass**
der ausgewertete Abstand (34, 35) über eine nicht lineare Funktion auf einen Hinweis-Wert (39) in dem Bereich von 0 und 1 abgebildet wird (38).

3. Verfahren nach Anspruch 1 oder 2,
**dadurch gekennzeichnet, dass**
alle Signale mit allen Signalen verglichen werden, die mögliche Grundfrequenzen sind, und alle möglichen Oberschwingungen miteinander verglichen werden.

**4.** Verfahren nach einem der vorangehenden Ansprüche,
wobei das Verfahren die folgenden zusätzlichen Schritte aufweist:

- Erzeugen eines Sperrsignals falls eine Übereinstimmung zwischen den beiden Signalen ermittelt wird, die auch eine Übereinstimmung mit einer unterschiedlichen Oberschwingung bilden kann,

wobei niedrigere Grundfrequenzen und ihre Übereinstimmungen höhere Grundfrequenzen sperren.

**5.** Verfahren nach einem der vorangehenden Ansprüche, umfassend den Schritt des Verschiebens der Hinweis-Werte von Oberschwingungen von einer nicht-dominanten Grundfrequenz, die jedoch in einer harmonischen Beziehung zu der dominanten Grundfrequenz steht, zu der dominanten Grundfrequenz und der zugehörigen Oberschwingung.

**6.** Verfahren nach einem der vorangehenden Ansprüche, umfassend den Schritt der Unterdrückung des Übersprechens zwischen benachbarten Bandpassfilter-Kanälen durch Verwenden eines "Mexican-Hat"-Filters entlang der Frequenzachse.

**7.** Computer-Programmprodukt, das dazu ausgebildet ist, ein Verfahren nach einem der vorangehenden Ansprüche zu implementieren, wenn es auf einer Computervorrichtung abläuft.

**8.** Berechnungsmittel zur Bestimmung eines Hinweis-Werts (39), der ein Maß dafür darstellt, ob zwei Bandpass-Signale (14, 15) Oberschwingungen einer gemeinsamen Grundfrequenz sind, wobei das Berechnungsmittel folgendes umfasst:

- Mittel (47, 47) zur Auswertung der harmonischen Beziehung der von den Basis-Bandpassfiltem (12, 13) erfassten Frequenzen, und
- Mittel (43, 44, 45, 46) zur Auswertung des Abstands (32, 33) von signifikanten Stellen des sinusförmigen Signals, z.B. der Null-Durchgänge (21, 22) oder der Maxima (23) oder Minima (24) oder von Grenzwert-Überschreitungen (25, 26) der Signale,

wobei die Auswertung des Abstands dieser signifikanten Stellen die Durchführung einer Selbst-Synchronisation zwischen den beiden Oberschwingungen (14, 15) umfasst, gemäß einer Prüfung, die irgendeine frequenzabhängige Verzögerung kompensiert.

**9.** Berechnungsmittel nach Anspruch 8,
**gekennzeichnet durch**

ein Mittel (48) zur Abbildung des ausgewerteten Abstands (34, 35) auf einen Hinweis-Wert (39) in dem Bereich von 0 und 1 über eine nicht lineare Funktion.

**10.** Berechnungsmittel nach Anspruch 8 oder 9,
**gekennzeichnet durch**
ein Mittel zum Vergleich aller Signale mit allen Signalen, die mögliche Grundfrequenzen sind, und zum Vergleich aller möglichen Oberschwingungen miteinander.

**11.** Berechnungsmittel, das dazu ausgebildet ist, ein Verfahren nach einem der Ansprüche 4 bis 6 zu implementieren.

**12.** Verwendung eines Verfahrens nach einem der Ansprüche 1 bis 6 für die Trennung von akustischen Schallquellen in monauralen Aufnahmen auf Basis ihrer Basis-Grundfrequenz.

**13.** Verwendung eines Verfahrens nach einem der Ansprüche 1 bis 6, um Störungen von einer Signalquelle zu trennen.

**14.** Verwendung eines Verfahrens nach einem der Ansprüche 1 bis 6, um Signalkomponenten zu trennen, die von unterschiedlichen Quellen stammen, die gewöhnlich in einem Signal vorhanden sind.

**Revendications**

**1.** Procédé de détermination d'une valeur de démonstration (39) correspondant à une mesure représentant si deux signaux passe-bande (14, 15) sont les harmoniques d'une fréquence fondamentale commune, procédé dans lequel

- le procédé évalue la relation d'harmonique des fréquences couvertes par les filtres passe-bande sous-jacents (12, 13) et la distance (32, 33) de points significatifs du signal sinusoïdal, par exemple, les passages par zéro (21, 22), les maxima (23), les minima (24) ou le passage par un seuil (25, 26) des signaux, et
- l'évaluation de la distance entre ces points significatifs réalise une synchronisation automatique entre les deux harmoniques (14, 15) en cours d'examen, compensant toute temporisation liée à la fréquence.

**2.** Procédé selon la revendication 1, **caractérisé en ce que** la distance évaluée (34, 35) est transformée (38) sous forme d'une valeur de démonstration (39) par l'intermédiaire d'une fonction non linéaire dans la fourchette de 0 à 1.

**3.** Procédé selon la revendication 1 ou 2, **caractérisé**

**en ce que** tous les signaux sont comparés à tous les signaux qui sont des fréquences fondamentales potentielles et à tous les harmoniques potentiels les uns par rapport aux autres.

4. Procédé selon l'une quelconque des revendications précédentes, le procédé comprenant les phases supplémentaires suivantes :

- génération d'un signal d'inhibition s'il est trouvé, entre les deux signaux, une correspondance de nature à créer également une correspondance avec un harmonique différent,

les fréquences fondamentales inférieures et leurs correspondances inhibant les fréquences fondamentales supérieures.

5. Procédé selon l'une quelconque des revendications précédentes, comprenant l'étape de déplacement des valeurs de démonstration des harmoniques à partir d'une fréquence fondamentale non dominante, mais en relation harmonique avec la fréquence fondamentale dominante, vers la fréquence fondamentale dominante et l'harmonique correspondant.

6. Procédé selon l'une quelconque des revendications précédentes, comprenant l'étape de suppression de diaphonie entre des canaux à filtre passe-bande adjacents en appliquant un filtre de type sombrero le long de l'axe de fréquence

7. Produit logiciel informatique, adapté pour mettre en oeuvre un procédé selon l'une quelconque des revendications précédentes avec un dispositif informatique.

8. Moyen informatique pour déterminer une valeur de démonstration (39) correspondant à une mesure représentant si deux signaux passe-bande (14, 15) sont des harmoniques d'une fréquence fondamentale commune,
le moyen informatique comprenant :

- des moyens (47, 47) pour évaluer la relation harmonique des fréquences couvertes par les filtres passe bande sous-jacents (12, 13) et,
- des moyens (43, 44, 45, 46) pour évaluer la distance (32, 33) entre points significatifs du signal sinusoïdal, par exemple les passages par zéro (21, 22), les valeurs maxima (23) ou minima (24) ou le passage par un seuil (25, 26) des signaux, l'évaluation de la distance entre ces points significatifs réalisant une auto-synchronisation entre les deux harmoniques (14, 15) en cours d'examen pour compenser toute temporisation liée à la fréquence.

9. Moyen informatique selon la revendication 8, **caractérisé par** des moyens (48) de transformation de la distance évaluée (34, 35) sous forme d'une valeur de démonstration (39), par l'intermédiaire d'une fonction non linéaire dans la fourchette de 0 à 1.

10. Moyen informatique selon la revendication 8 ou 9, **caractérisé par** des moyens pour comparer tous les signaux à tous les signaux qui sont des fréquences fondamentales potentielles et pour comparer tous les harmoniques potentiels les uns par rapport aux autres.

11. Moyen informatique conçu pour mettre en oeuvre un procédé selon l'une quelconque des revendications 4 à 6.

12. Utilisation d'un procédé selon l'une quelconque des revendications 1 à 6 pour la séparation de sources sonores acoustiques dans des enregistrements monauraux sur la base de leur fréquence fondamentale sous-jacente.

13. Utilisation d'un procédé selon l'une quelconque des revendications 1 à 6 pour séparer le bruit d'une source de signaux.

14. Utilisation d'un procédé selon l'une quelconque des revendications 1 à 6 pour séparer les composants de signaux provenant de différentes sources classiquement présentes dans un signal.

Fig. 1

Fig. 2

Filter the frequencies $f_x=(x+1)f_0$ and $f_y=(y+1)f_0$ — 31

$f_x=(x+1)f_0$ ← 14

$f_y=(y+1)f_0$ ← 15

Measure the distance of $N_x=(x+1)N_0$ significant points ← 32

Measure the distance of $N_y=(y+1)N_0$ significant points — 33

← 34

← 35

Compare the measured distances by calculating the differences between each of the two measured distances — 36

← 37

Map said difference values to an evidence value in the range of 0 to 1 via e.g. a Gaussian function — 38

← 39

Fig. 3

Filter-
bank 41

Select
Harmonics 42

14 15

$f_x=(x+1)f_0$ Lower
Harmonic

Upper
Harmonic $f_y=(y+1)f_0$

43 Zero Crossing
Detector

Zero Crossing
Detector 44

45 Integrator

Integrator 46

Comparison 47

Nonlinear
Function 48

39

Evidence
Value

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. BREGMAN.** Auditory Scene Analysis. MIT Press, 1990
- **G. LANGNER ; H. SCHULZE ; M. SAMS ; P. HEIL.** The topographic representation of periodicity pitch in the auditory cortex. *Proc. of the NATO Adv. Study Inst. on Comp. Hearing,* 1998, 91-97
- **G. HU ; D. WANG.** Monaural speech segregation based on pitch tracking and amplitude. IEEE Trans. *On Neural Networks,* September 2004, vol. 15 (5), 1135-1150
- **VIRTANEN.** Separation of Harmonic Sound Sources Using Sinusoidal Modeling. *ICASSP,* 2000, 765-768
- **B. MOORE.** An Introduction to the Psychology of Hearing. Academic Press, 2003